# EUROPEAN PATENT SPECIFICATION

(11) **EP 3 798 941 B1**
(45) Date of publication and mention of the grant of the patent: **02.07.2025**
(21) Application number: 19806663.1
(22) Date of filing: 21.05.2019
(51) Int. Cl.: G06Q 10/04

(54) **VACANT HOUSE DETERMINATION DEVICE, VACANT HOUSE DETERMINATION METHOD, AND RECORDING MEDIUM**
VORRICHTUNG ZUR BESTIMMUNG EINES LEERSTEHENDEN HAUSES, VERFAHREN ZUR BESTIMMUNG EINES LEERSTEHENDEN HAUSES UND AUFZEICHNUNGSMEDIUM
DISPOSITIF DE DÉTERMINATION DE MAISON INOCCUPÉE, PROCÉDÉ DE DÉTERMINATION DE MAISON INOCCUPÉE ET SUPPORT D'ENREGISTREMENT

(30) Priority: 23.05.2018 JP 2018098922
(43) Date of publication of application: 31.03.2021
(73) Proprietor: NEC Corporation, 108-8001 Tokyo (JP)
(72) Inventor: KUSANAGI Tetsuya, Tokyo 108-8001 (JP)
(74) Representative: Vossius & Partner Patentanwälte Rechtsanwälte mbB
(86) International application number: PCT/JP2019/020093
(87) International publication number: WO 2019/225597

(56) References cited:
- JP-A- 2008 256 274
- JP-A- 2011 253 216
- JP-A- 2017 084 202
- JP-A- 2017 097 533
- KR-B1- 101 859 341
- US-A1- 2008 240 505
- US-A1- 2017 344 844
- "JSCE", vol. 03, 2015, pages 337 - 338, XP055753295, Retrieved from the Internet <URL:http://library.jsce.or.jp/jsce/open/00063/2015/2015-04-0037.pdf> [retrieved on 20190723]
- YUKI ONO, HITOSHI UEMATSU AND KIICHIRO KUMAGAI: "Estimation model for the spatial distributions of vacancy aimed at monitoring urban structures", 26TH GISA ACADEMIC RESEARCH PRESENTATION CONFERENCE; OCTOBER 28TH (SAT) -29TH (SUN), 2017, 31 December 2017 (2017-12-31), pages 1 - 4, XP009524261
- IKUHO YAMADA, TETSUYA KUSANAGI; TATSUYA SEKIGUCHI: "Areas using GIS: Creation of vacant house estimation model from the viewpoint of building attributes", 2016 CSIS JOINT RESEARCH REPORT, vol. 691, 31 March 2017 (2017-03-31), pages 1 - 2, XP009524262, Retrieved from the Internet <URL:https://joras.csis.u-tokyo.ac.jp/annual_report/downloadFile/id/365> [retrieved on 20190723]
- ANONYMOUS: "MICRO GEO DATA LAB", 15 October 2016 (2016-10-15), pages 1 - 29, XP055753304, Retrieved from the Internet <URL:http://microgeodata.jp/pdf/mgd10/mgd10_6.pdf> [retrieved on 20190723]

## Description

### [Technical Field]

The present invention relates to a vacant house determination device, a vacant house determination method, and a program.

### [Background Art]

In recent years, an increasing number of vacant houses has been attracting attention as a nationwide social problem. The increase in the number of vacant houses is known to have an adverse effect on the local environment, disaster prevention, and crime prevention, and various countermeasures have been developed by national and local governments to deal with the problem of the growing number of vacant houses. To develop these countermeasures, it is highly important to know the number of vacant houses in a district.

PTL 1 discloses a technology by which, upon input of a survey condition relating to survey information and of a result of the survey, a vacant house information DB is referenced to search for the survey condition relating to house information and the survey result, at least contents of vacant house information and a house map are displayed, and the house map and the vacant house information relating to the search result are stored.

NPL 1 discloses a technology for generating a model capable of estimating a vacant house ratio.

### [Citation List]

### [Patent Literature]

[PTL 1] JP 2017-97533 A

### [Non Patent Literature]

[NPL 1] "2016 CSIS Joint Research Report No. 691, Construction of an estimation model of the rate of vacant houses in relation to residential and building characteristics using GIS", [online], [Searched on May 21, 2009], Internet, <URL: https://joras.csis.u-tokyo.ac.jp/annual_report/downloadFile/id/365>

### [Summary of Invention]

### [Technical Problem]

In the technologies as described above, a technology for grasping the state of vacant houses in a desired district with as little effort as possible is needed.

Accordingly, an object of the present disclosure is to provide a vacant house determination device, a vacant house determination method, and a program that solve the problems described above.

### [Solution to Problem]

According to a first aspect of the present invention, a vacant house determination device includes: a formula deriving unit for deriving a vacant house probability calculation formula with respect to a predetermined district, based on map data that at least includes coordinates of a vacant house surveyed among houses included in a map, attribute information regarding a structural object, and topographic information; a vacant house probability calculating unit for calculating the vacant house probability with respect to each of the houses included in the map data, by using the vacant house probability calculation formula; and a vacant house determining unit for determining whether a house having the vacant house probability equal to or more than a predetermined value is a vacant house, based on machine learning data for presuming that a house in a captured image is a vacant house and image information regarding a site of a house having the vacant house probability equal to or more than a predetermined value, the machine learning data being generated based on, among pieces of pixel information representing sites of the houses in the captured image including the predetermined district, the pixel information representing a site of a house corresponding to the coordinates of the vacant house.

According to a second aspect of the present invention, a vacant house determination method includes: deriving a vacant house probability calculation formula with respect to a predetermined district, based on map data that at least includes coordinates of a vacant house surveyed among houses included in a map, attribute information regarding a structural object, and topographic information; calculating the vacant house probability with respect to each of the houses included in the map data, by using the vacant house probability calculation formula; and determining whether a house having the vacant house probability equal to or more than a predetermined value is a vacant house, based on machine learning data for presuming that a house in a captured image is a vacant house and image information regarding a site of a house having the vacant house probability equal to or more than a predetermined value, the machine learning data being generated based on, among pieces of pixel information representing sites of the houses in the captured image including the predetermined district, the pixel information representing a site of a house corresponding to the coordinates of the vacant house.

According to a second aspect of the present invention, a program causes a computer for a vacant house determination device to function as: formula deriving means for deriving a vacant house probability calculation formula with respect to a predetermined district, based on map data that at least includes coordinates of a vacant house surveyed among houses included in a map, attribute information regarding a structural object, and topographic information; vacant house probability calculating means for calculating the vacant house probability with respect to each of the houses included in the map data, by using the vacant house probability calculation formula; and vacant house determining means for determining whether a house having the vacant house probability equal to or more than a predetermined value is a vacant house, based on machine learning data for presuming that a house in a captured image is a vacant house and image information regarding a site of a house having the vacant house probability equal to or more than a predetermined value, the machine learning data being generated based on, among pieces of pixel information representing sites of the houses in the captured image including the predetermined district, the pixel information representing a site of a house corresponding to the coordinates of the vacant house. The program may be stored in a non-transitory recording medium.

### [Advantageous Effects of Invention]

According to the present disclosure, it is made possible to grasp the state of vacant houses in a desired district with as little effort as possible.

### [Brief Description of Drawings]

Fig. 1 is a functional block diagram of a vacant house determination device according to an example embodiment of the present invention.
Fig. 2 is a diagram illustrating a hardware configuration of the vacant house determination device according to an example embodiment of the present invention.
Fig. 3 is a first diagram illustrating a process flow for the vacant house determination device according to an example embodiment of the present invention.
Fig. 4 is a first diagram illustrating a process flow for the vacant house determination device according to an example embodiment of the present invention.
Fig. 5 is a functional block diagram of a vacant house determination device in a minimum configuration according to an example embodiment of the present invention.

### [Example Embodiment]

A vacant house determination device according to an example embodiment of the present invention will now be described with reference to the drawings.

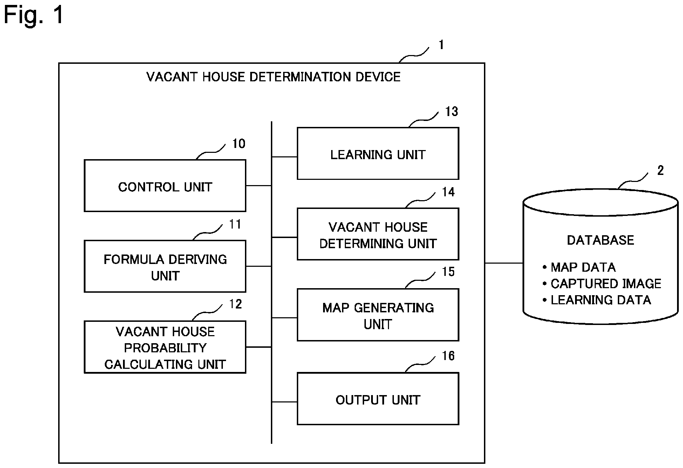

Fig. 1 is a functional block diagram of a vacant house determination device according to the example embodiment.

A computer for a vacant house determination device 1 executes a vacant house determination program that is stored in advance. The vacant house determination device 1 includes individual functions, namely a control unit 10, a formula deriving unit 11, a vacant house probability calculating unit 12, a learning unit 13, a vacant house determining unit 14, and a map generating unit 15. As shown in Fig. 1, the vacant house determination device 1 is communicatively connected to a database 2.

The database 2 records, for example, map data and a captured image. The map data and the captured image are map data and a captured image that are associated with each other and include a predetermined district. A predetermined district may be a city, ward, town, village, land use zone, or the like. The map data includes, for example, the coordinates (latitude and longitude) of each surveyed vacant house among the houses present on a map including a predetermined district, the attribute information regarding a structural object, and the topographic information. Information regarding a structural object may be, for example, the coordinates of a road, the width information regarding a road, the identification information (structural object ID) regarding a major public facility (station, school, or the like). The topographic information includes information such as an altitude. The captured image may be an aerial photograph image, a satellite image, or the like. The captured image is preferably a high-definition image.

The database 2 records machine learning data generated by the vacant house determination device. The vacant house determination device 1 generates machine learning data for each district. The machine learning data is the data for presuming that a house in a captured image is a vacant house, on the basis of the pixel information regarding a site of a house corresponding to the coordinates of a vacant house, among pieces of pixel information regarding sites of houses in a captured image including a predetermined district.

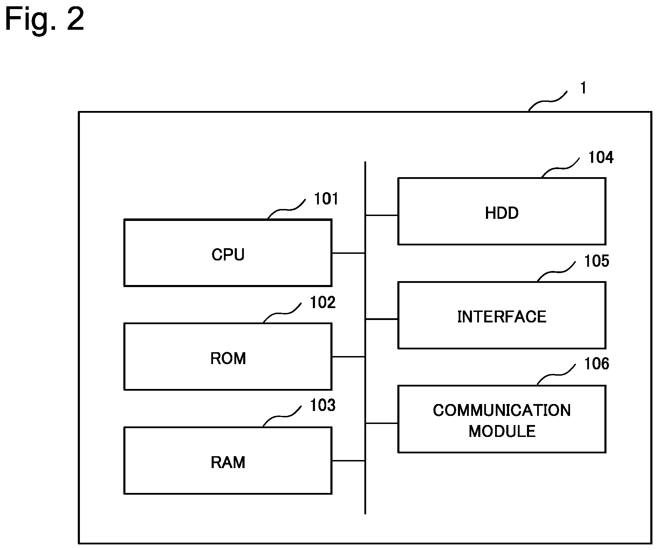

Fig. 2 is a diagram illustrating a hardware configuration of the vacant house determination device.

As illustrated in Fig. 2, a computer for the vacant house determination device 1 includes hardware such as a central processing unit (CPU) 101, a read only memory (ROM) 102, a random access memory (RAM) 103, a hard disk drive (HDD) 104, an interface 105, and a communication module 106.

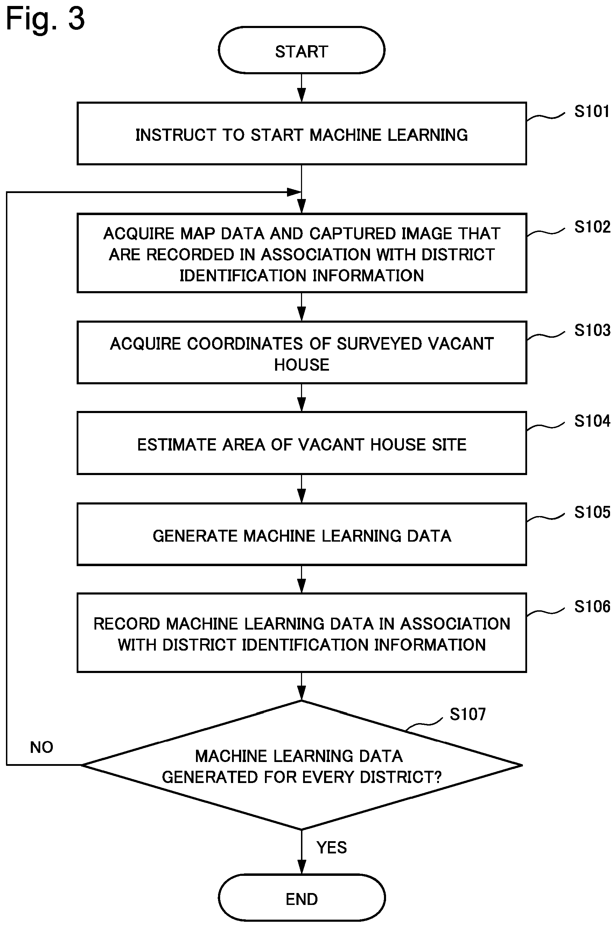

Fig. 3 is a first diagram illustrating a process flow for the vacant house determination device.

The vacant house determination device 1 generates, in advance and using map data and captured image data, machine learning data to be used for presuming that a house is a vacant house. More specifically, the machine learning data is the data used for presuming that a house in a captured image is a vacant house, on the basis of the pixel information regarding a site of a house corresponding to the coordinates of a vacant house, among pieces of pixel information regarding sites of houses in a captured image including a predetermined district.

For example, the vacant house determination device 1 receives an input of an instruction to start machine learning from a user interface (step S101). Then, the learning unit 13 acquires the map data and the captured image that are recorded in association with the identification information (district ID) regarding a first district from the database 2 (step S102). The learning unit 13 acquires the coordinates of a surveyed vacant house from the map data (step S103). On the basis of the coordinates in the captured image corresponding to the coordinates of the vacant house, the learning unit 13 estimates the area of the site of the house at the coordinates (step S104). The learning unit 13 may estimate the area of the site, on the basis of the coordinates of the vacant house and of the range of colors representing trees surrounding the vacant house. In addition, the learning unit 13 may estimate the site of the vacant house on the basis of an image showing a road around the house. Any other method may be used to estimate the site of the vacant house. The learning unit 13 generates machine learning data for determining that an image of a certain area included in a certain captured image shows a vacant house, by using an image of a site of a vacant house, an image of a site of a non-vacant house, and a machine learning technique such as neural network learning (step S105). The learning unit 13 records the machine learning data in the database 2 in association with the identification information regarding the district (step S106). In addition, the learning unit 13 determines whether machine learning data has been generated for a pair of map data and a captured image for every district included in the database 2 (step S107). If the machine learning data has not been generated for every pair of map data and a captured image, the learning unit 13 repeats generation of machine learning data for any pair of map data and a captured image for which machine learning data has not been generated yet. Note that the learning unit 13 may sequentially acquire a plurality of captured images of a district corresponding to times, and may learn, on the basis of the transition of the captured images of the district, information about an element for determining that a house is a vacant house using the coordinates of a vacant house and an image of an area of a site of the vacant house. Examples of the element for determining that a house is a vacant house include an altitude X1, a nearest road width X2, a distance from the nearest station X3, a land use zone X4, and other elements such as how old the house is, how often cars enter/leave the site, how many plants are growing in the site, and how often houses in the district are rebuilt.

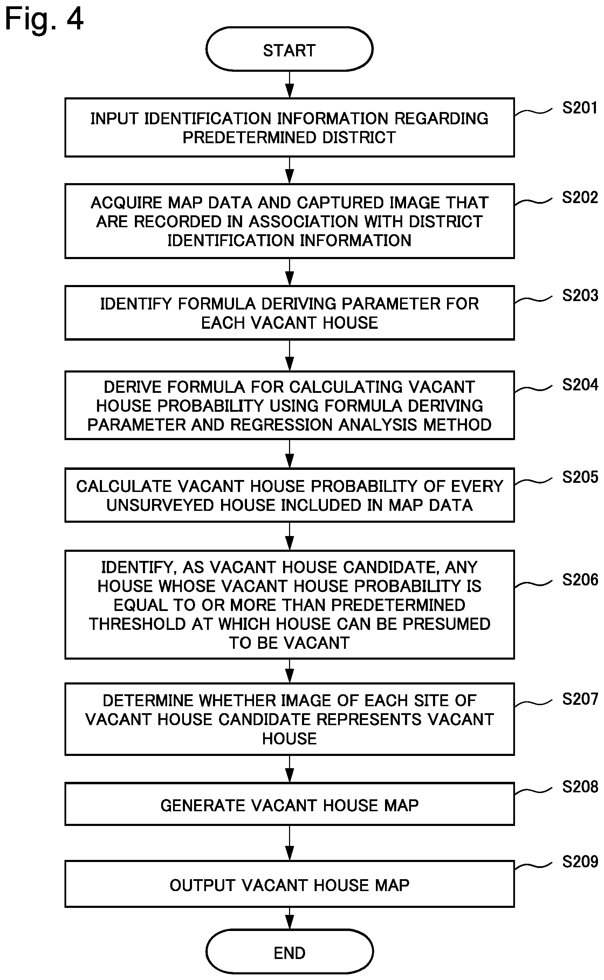

Fig. 4 is a second diagram illustrating a process flow for the vacant house determination device.

After generating the machine learning data in advance, the vacant house determination device 1 receives an input of identification information regarding a predetermined district (step S201). For example, the vacant house determination device 1 obtains identification information regarding a predetermined district from a user interface device on the basis of a user operation. In addition, the vacant house determination device 1 receives an instruction to start the processing. Accordingly, the control unit 10 in the vacant house determination device 1 acquires the map data, the captured image, and the machine learning data that are recorded in association with the identification information regarding the predetermined district from the database 2 (step S202).

The formula deriving unit 11 acquires the map data. The formula deriving unit 11 acquires the coordinates (latitude and longitude) of a surveyed vacant house, the attribute information regarding a structural object, and the topographic information that are included in the map data. From among the acquired pieces of information, the formula deriving unit 11 identifies a predetermined formula deriving parameter for each vacant house (step S203). Examples of the formula deriving parameter may be information pieces including the altitude of the vacant house, the width of a road nearest to the coordinates of the vacant house, the coordinates of a station nearest to the vacant house, the identifier of a land use zone in the district including the vacant house. More specifically, the formula deriving unit 11 identifies the altitude of the vacant house on the basis of the altitude recorded in the map data in association with the coordinates of the vacant house. In addition, the formula deriving unit 11 identifies the width (nearest road width) of a road recorded in the map data, the road being located at the coordinates closest to the coordinates of the vacant house. The formula deriving unit 11 also identifies the coordinates of a station nearest to the coordinates of the vacant house. Furthermore, the formula deriving unit 11 identifies the identification information regarding a land use zone that includes the coordinates of the vacant house, on the basis of a relationship between the coordinates of the vacant house and the coordinates of each land use zone recorded in the map data. The present example embodiment is described with an example in which the coordinates (latitude and longitude) of a surveyed vacant house, the attribute information regarding a structural object, and the topographic information are included in the map data; however, these pieces of information may be stored in the database 2 as separate data from the map data, and the vacant house determination device 1 may use the data to identify a formula deriving parameter for each vacant house as in the example.

The formula deriving unit 11 derives a vacant house probability calculation formula with regard to a district indicated in the map data, using both an identified formula deriving parameter corresponding to each vacant house and a regression analysis method (step S204). An equation (1) represents an example of the vacant house probability calculation formula. The formula deriving unit 11 derives a vacant house probability calculation formula by calculating the correlation coefficients A1, A2, A3, A4, and so on for the vacant house probability Y. In the equation (1), A represents a constant. Examples of the regression analysis method include a logistic regression analysis and a multiple regression analysis. Vacant house probability Y = A+ A1 (altitude X1) + A2 (nearest road width X2) + A3 (distance from nearest station X3) + A4 (land use zone X4)

When the vacant house probability calculation formula has been derived by the formula deriving unit 11, the vacant house probability calculating unit 12 uses the formula to calculate the vacant house probability Y of every unsurveyed house included in the map data (step S205). Specifically, the vacant house probability calculating unit 12 acquires the coordinates of an unsurveyed vacant house from the map data and, on the basis of the coordinates, identifies the altitude X1, the nearest road width X2, the distance X3 from the nearest station, and the value X4 of the land use zone identifier. The vacant house probability calculating unit 12 inputs these values to the vacant house probability calculation formula (1) to calculate the vacant house probability Y. The vacant house probability of a surveyed house may be 100%. The vacant house probability calculating unit 12 records the vacant house probability data indicating the vacant house probabilities of individual houses included in the map data in the database 2 in such a way that the vacant house probability data is associated with the map data. In the case where the learning unit 13 has identified an element for determining that a house is a vacant house, the formula deriving unit 11 may reconstruct the formula for calculating the vacant house probability Y further including the term of the element.

When the vacant house probability calculating unit 12 has calculated the vacant house probability of every house included in the map data, the vacant house determining unit 14 identifies, as a vacant house candidate, any house that is included in the map data and has a vacant house probability equal to or more than a predetermined threshold of a vacant house probability at which it can be presumed that a house is a vacant house (step S206). The vacant house determining unit 14 constructs a neural network based on the machine learning data acquired in step S202 and, by using the neural network, determines whether the image of the house site of each vacant house candidate represents a vacant house (step S207). Note that the house site of each vacant house candidate in the map data can be estimated in a way similar to the way in step S104. The map generating unit 15 generates a vacant house map indicating a vacant house at the coordinates of the position of the house that has been determined to be a vacant house (step S208). For example, the map generating unit 15 plots a point of the position at which a vacant house has been determined to be present with a predetermined icon image (an image like a red dot) to generate the vacant house map. An output unit 16 outputs the vacant house map to a predetermined device (step S209). The output unit 16 may record the vacant house map in the database 2.

Note that the vacant house determination device 1 may be allowed to repeat the processing from step S203 by using the map data of the vacant house map generated in step S208 as the map data to be acquired in step S202. Repeating the processing in steps S203 to S208 makes it possible to generate more accurate vacant house map data.

Through the above-described processing, the vacant house determination device 1 can determine that, on the basis of machine learning data, a house having a vacant house probability value equal to or more than a predetermined threshold is a vacant house. In addition, the vacant house determination device 1 can generate a vacant house map indicating the position of a house determined to be a vacant house in the district specified the user and can output the map to a desired device.

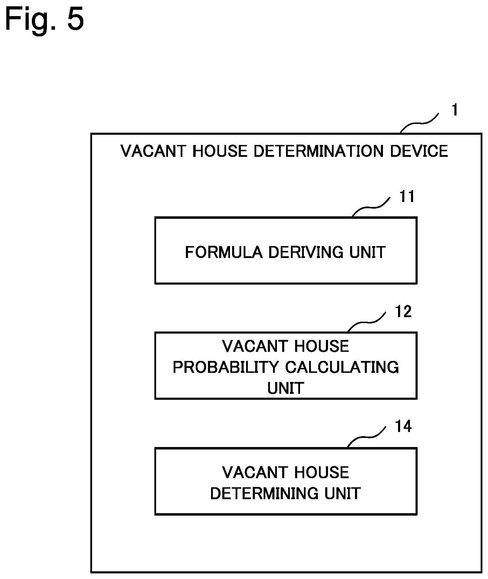

Fig. 5 is a diagram illustrating a minimum configuration of the vacant house determination device.

As shown in Fig. 5, the vacant house determination device 1 includes functions of at least the formula deriving unit 11, the vacant house probability calculating unit 12, and the vacant house determining unit 14.

The formula deriving unit 11 derives a vacant house probability calculation formula with respect to a predetermined district, on the basis of map data that at least includes the coordinates of a vacant house surveyed among houses included in the map, the attribute information regarding a structural object, and the topographic information.

The vacant house probability calculating unit 12 calculates the vacant house probability with respect to each of the houses included in the map data, using the vacant house probability calculation formula.

The vacant house determining unit 14 determines whether a house having a vacant house probability equal or more than a predetermined value is a vacant house, on the basis of the machine learning data for presuming that a house in a captured image is a vacant house and the image information regarding a site of the house having a vacant house probability equal to or more than a predetermined value, the machine learning data being generated on the basis of the pixel information representing a site of a house corresponding to the coordinates of a vacant house, among pieces of pixel information representing sites of houses in the captured image including a predetermined district.

Note that the above-described vacant house determination device 1 contains a computer system. The process of the processing steps described above is stored in the form of a program in a computer-readable recording medium, and the processing steps are performed by the computer through reading and executing the program. Examples of the computer-readable recording medium herein include a magnetic disk, a magneto-optical disk, a CD-ROM, a DVD-ROM, a semiconductor memory, and the like. Alternatively, the computer program may be delivered to a computer via a communication line, and the computer that has received the delivered program may execute the program.

Furthermore, the aforementioned program may be a program for achieving some of the functions described above. Moreover, the program may be a so-called difference file (difference program) capable of achieving the above-described functions in combination with a program that is already recorded in the computer system. It will be understood by those of ordinary skill in the art that various changes in form and details may be made therein without departing from the scope of the present invention as defined by the claims.

This application is based upon and claims the benefit of priority from Japanese patent application No. 2018-098922, filed on May 23, 2018.

### [Reference signs List]

- 1: Vacant house determination device
- 2: Database
- 10: Control unit
- 11: Formula deriving unit
- 12: Vacant house probability calculating unit
- 13: Learning unit
- 14: Vacant house determining unit
- 15: Map generating unit
- 16: Output unit

## Claims

1. A vacant house determination device comprising:
learning means for acquiring map data that includes a predetermined district and at least includes coordinates of a vacant house surveyed among houses included in a map, attribute information regarding a structural object, and topographic information, and a captured image that is associated with the map data and includes the predetermined district from a storage device, and generating machine learning data for presuming that a house in the captured image is the vacant house, the machine learning data being generated based on, among pieces of pixel information representing sites of the houses in the captured image including the predetermined district, the pixel information representing a site of a house corresponding to the coordinates of the vacant house;
formula deriving means for deriving a vacant house probability calculation formula with respect to a district specified by a user, based on the map data;
vacant house probability calculating means for calculating the vacant house probability with respect to each of the houses included in the specified district in the map data, by using the vacant house probability calculation formula; and
vacant house determining means for determining whether a house having the vacant house probability equal to or more than a predetermined value is a vacant house in the specified district, based on
machine learning data for presuming that a house in the captured image is a vacant house, the machine learning data being generated based on, among pieces of pixel information representing sites of the houses in the captured image, the pixel information representing a site of a house corresponding to the coordinates of the vacant house, and
image information regarding a site of a house having the vacant house probability equal to or more than a predetermined value;
map generating means for generating vacant house map information indicating a position of the house that has been determined to be a vacant house; and
output means for outputting the vacant house map information to a predetermined device or the storage device.

2. The vacant house determination device according to claim 1, wherein
the learning means learns an element for determining, based on the pixel information representing a site of a house corresponding to the coordinates of the vacant house, that a house is a vacant house, and
the formula deriving means derives the vacant house probability calculation formula that includes a term of the element.

3. A vacant house determination method comprising:
acquiring map data that includes a predetermined district and at least includes coordinates of a vacant house surveyed among houses included in a map, attribute information regarding a structural object, and topographic information, and a captured image that is associated with the map data and includes the predetermined district from a storage device, and generating machine learning data for presuming that a house in the captured image is the vacant house, the machine learning data being generated based on, among pieces of pixel information representing sites of the houses in the captured image including the predetermined district, the pixel information representing a site of a house corresponding to the coordinates of the vacant house;
deriving a vacant house probability calculation formula with respect to a district specified by a user, based on the map data;
calculating the vacant house probability with respect to each of the houses included in the specified district in the map data, by using the vacant house probability calculation formula; and
determining whether a house having the vacant house probability equal to or more than a predetermined value is a vacant house in the specified district, based on
machine learning data for presuming that a house in the captured image is a vacant house and image information regarding a site of a house having the vacant house probability equal to or more than a predetermined value, the machine learning data being generated based on, among pieces of pixel information representing sites of the houses in the captured image, the pixel information representing a site of a house corresponding to the coordinates of the vacant house;
generating vacant house map information indicating a position of the house that has been determined to be a vacant house; and
outputting the vacant house map information to a predetermined device or the storage device.

4. A program that causes a computer for a vacant house determination device to function as:
learning means for acquiring map data that includes a predetermined district and at least includes coordinates of a vacant house surveyed among houses included in a map, attribute information regarding a structural object, and topographic information, and a captured image that is associated with the map data and includes the predetermined district from a storage device, and generating machine learning data for presuming that a house in the captured image is the vacant house, the machine learning data being generated based on, among pieces of pixel information representing sites of the houses in the captured image including the predetermined district, the pixel information representing a site of a house corresponding to the coordinates of the vacant house;
formula deriving means for deriving a vacant house probability calculation formula with respect to a district specified by a user, based on the map data;
vacant house probability calculating means for calculating the vacant house probability with respect to each of the houses included in the specified district in the map data, by using the vacant house probability calculation formula; and
vacant house determining means for determining whether a house having the vacant house probability equal to or more than a predetermined value is a vacant house in the specified district, based on
machine learning data for presuming that a house in the captured image is a vacant house, the machine learning data being generated based on, among pieces of pixel information representing sites of the houses in the captured image, the pixel information representing a site of a house corresponding to the coordinates of the vacant house, and
image information regarding a site of a house having the vacant house probability equal to or more than a predetermined value;
map generating means for generating vacant house map information indicating a position of the house that has been determined to be a vacant house; and
output means for outputting the vacant house map information to a predetermined device or the storage device.

## Patentansprüche

1. Vorrichtung zur Bestimmung eines leerstehenden Hauses, die aufweist:
eine Lerneinrichtung zur Erlangung von Kartendaten, die einen vorgegebenen Bezirk umfassen und wenigstens Koordinaten eines leerstehenden Hauses, das unter den in einer Karte enthaltenen Häusern überprüft wird, Attributinformationen in Bezug auf ein Bauobjekt und topografische Informationen umfassen, und eines aufgenommenen Bilds, das zu den Kartendaten gehört und den vorgegebenen Bezirk umfasst, aus einer Speichervorrichtung, und zur Erzeugung von Maschinenlerndaten für die Vermutung, dass ein Haus in dem aufgenommenen Bild das leerstehende Haus ist, wobei die Maschinenlerndaten basierend auf Bildpunktinformationen, die Orte der Häuser in dem aufgenommenen Bild, das den vorgegebenen Bezirk umfasst, darstellen, erzeugt werden, wobei die Bildpunktinformationen einen Ort eines Hauses, der den Koordinaten des leerstehenden Hauses entspricht, darstellen;
eine Formelableitungseinrichtung zum Ableiten einer Wahrscheinlichkeitsberechnungsformel für ein leerstehendes Haus in Bezug auf einen von einem Nutzer spezifizierten Bezirk basierend auf den Kartendaten;
eine Berechnungseinrichtung für die Wahrscheinlichkeit eines leerstehenden Hauses zur Berechnung der Wahrscheinlichkeit für ein leerstehendes Hauses in Bezug auf jedes der Häuser, die in dem spezifizierten Bezirk in den Kartendaten enthalten sind, unter Verwendung der Wahrscheinlichkeitsberechnungsformel für ein leerstehendes Haus; und
eine Einrichtung zur Bestimmung eines leerstehenden Hauses zur Bestimmung, ob ein Haus mit der Wahrscheinlichkeit für ein leerstehendes Haus, die größer oder gleich einem vorgegebenen Wert ist, ein leerstehendes Haus in dem spezifizierten Bezirk ist, basierend auf:
Maschinenlerndaten für die Vermutung, dass ein Haus in dem aufgenommenen Bild ein leerstehendes Haus ist, wobei die Maschinenlerndaten basierend auf Bildpunktinformationen, die Orte der Häuser in dem aufgenommenen Bild darstellen, erzeugt werden, wobei die Bildpunktinformationen einen Ort eines Hauses, der den Koordinaten des leerstehenden Hauses entspricht, darstellen, und
Bildinformationen, die einen Ort eines Hauses mit der Wahrscheinlichkeit für ein leerstehendes Haus größer oder gleich einem vorgegebenen Wert darstellen;
eine Kartenerzeugungsvorrichtung zur Erzeugung von Karteninformationen über ein leerstehendes Haus, die eine Position des Hauses, das als ein leerstehendes Haus bestimmt wurde, anzeigen; und
eine Ausgabeeinrichtung zum Ausgeben von Karteninformationen über das leerstehende Haus an eine vorgegebene Vorrichtung oder die Speichervorrichtung.

2. Vorrichtung zur Bestimmung eines leerstehenden Hauses nach Anspruch 1, wobei
die Lerneinrichtung basierend auf den Bildpunktinformationen, die einen Ort eines Hauses, der den Koordinaten des leerstehenden Hauses, entspricht, darstellt, ein Element zur Bestimmung, dass ein Haus ein leerstehendes Haus ist, erlernt, und
die Formelableitungseinrichtung die Wahrscheinlichkeitsberechnungsformel für ein leerstehendes Haus, die einen Term des Elements umfasst, ableitet.

3. Verfahren zur Bestimmung eines leerstehenden Hauses, das aufweist:
Erlangen von Kartendaten, die einen vorgegebenen Bezirk umfassen und wenigstens Koordinaten eines leerstehenden Hauses, das unter den in einer Karte enthaltenen Häusern überprüft wird, Attributinformationen in Bezug auf ein Bauobjekt und topografischen Informationen umfassen, und eines aufgenommenen Bilds, das zu den Kartendaten gehört und den vorgegebenen Bezirk umfasst, aus einer Speichervorrichtung, und Erzeugen von Maschinenlerndaten für die Vermutung, dass ein Haus in dem aufgenommenen Bild das leerstehende Haus ist, wobei die Maschinenlerndaten basierend auf Bildpunktinformationen, die Orte der Häuser in dem aufgenommenen Bild, das den vorgegebenen Bezirk umfasst, darstellen, erzeugt werden, wobei die Bildpunktinformationen einen Ort eines Hauses, der den Koordinaten des leerstehenden Hauses entspricht, darstellen;
Ableiten einer Wahrscheinlichkeitsberechnungsformel für ein leerstehendes Haus in Bezug auf einen von einem Nutzer spezifizierten Bezirk basierend auf den Kartendaten;
Berechnen der Wahrscheinlichkeit eines leerstehenden Hauses in Bezug auf jedes der Häuser, die in dem spezifizierten Bezirk in den Kartendaten enthalten sind, unter Verwendung der Wahrscheinlichkeitsberechnungsformel für ein leerstehendes Haus; und
Bestimmen, ob ein Haus mit der Wahrscheinlichkeit für ein leerstehendes Haus, die größer oder gleich einem vorgegebenen Wert ist, ein leerstehendes Haus in dem spezifizierten Bezirk ist, basierend auf:
Maschinenlerndaten für die Vermutung, dass ein Haus in dem aufgenommenen Bild ein leerstehendes Haus ist, und Bildinformationen, die einen Ort eines Hauses mit der Wahrscheinlichkeit für ein leerstehendes Haus größer oder gleich einem vorgegebenen Wert betreffen, wobei die Maschinenlerndaten basierend auf Bildpunktinformationen, die Orte der Häuser in dem aufgenommenen Bild darstellen, erzeugt werden, wobei die Bildpunktinformationen einen Ort eines Hauses, der den Koordinaten des leerstehenden Hauses entspricht, darstellen;
Erzeugen von Karteninformationen über ein leerstehendes Haus, die eine Position des Hauses, das als ein leerstehendes Haus bestimmt wurde, anzeigen; und
Ausgeben der Karteninformationen für das leerstehende Haus an eine vorgegebene Vorrichtung oder die Speichervorrichtung.

4. Programm, das bewirkt, dass ein Computer für eine Vorrichtung zur Bestimmung eines leerstehenden Hauses, wirkt als:
eine Lerneinrichtung zur Erlangung von Kartendaten, die einen vorgegebenen Bezirk umfassen und wenigstens Koordinaten eines leerstehenden Hauses, das unter den in einer Karte enthaltenen Häusern überprüft wird, Attributinformationen in Bezug auf ein Bauobjekt und topografische Informationen umfassen, und eines aufgenommenen Bilds, das zu den Kartendaten gehört und den vorgegebenen Bezirk umfasst, aus einer Speichervorrichtung, und zur Erzeugung von Maschinenlerndaten für die Vermutung, dass ein Haus in dem aufgenommenen Bild das leerstehende Haus ist, wobei die Maschinenlerndaten basierend auf Bildpunktinformationen, die Orte der Häuser in dem aufgenommenen Bild, das den vorgegebenen Bezirk umfasst, darstellen, erzeugt werden, wobei die Bildpunktinformationen einen Ort eines Hauses, der den Koordinaten des leerstehenden Hauses entspricht, darstellen;
eine Formelableitungseinrichtung zum Ableiten einer Wahrscheinlichkeitsberechnungsformel für ein leerstehendes Haus in Bezug auf einen von einem Nutzer spezifizierten Bezirk basierend auf den Kartendaten;
eine Berechnungseinrichtung für die Wahrscheinlichkeit eines leerstehenden Hauses zur Berechnung der Wahrscheinlichkeit für ein leerstehendes Hauses in Bezug auf jedes der Häuser, die in dem spezifizierten Bezirk in den Kartendaten enthalten sind, unter Verwendung der Wahrscheinlichkeitsberechnungsformel für ein leerstehendes Haus; und
eine Einrichtung zur Bestimmung eines leerstehenden Hauses zur Bestimmung, ob ein Haus mit der Wahrscheinlichkeit für ein leerstehendes Haus, die größer oder gleich einem vorgegebenen Wert ist, ein leerstehendes Haus in dem spezifizierten Bezirk ist, basierend auf:
Maschinenlerndaten für die Vermutung, dass ein Haus in dem aufgenommenen Bild ein leerstehendes Haus ist, wobei die Maschinenlerndaten basierend auf Bildpunktinformationen, die Orte der Häuser in dem aufgenommenen Bild darstellen, erzeugt werden, wobei die Bildpunktinformationen einen Ort eines Hauses, der den Koordinaten des leerstehenden Hauses entspricht, darstellen, und
Bildinformationen, die einen Ort eines Hauses mit der Wahrscheinlichkeit für ein leerstehendes Haus größer oder gleich einem vorgegebenen Wert darstellen;
eine Kartenerzeugungsvorrichtung zur Erzeugung von Karteninformationen über ein leerstehendes Haus, die eine Position des Hauses, das als ein leerstehendes Haus bestimmt wurde, anzeigen; und
eine Ausgabeeinrichtung zum Ausgeben von Karteninformationen über das leerstehende Haus an eine vorgegebene Vorrichtung oder die Speichervorrichtung.

## Revendications

1. Dispositif de détermination de maison inoccupée comprenant :
un moyen d'apprentissage pour l'acquisition de données cartographiques qui comportent un quartier prédéterminé et comportent au moins des coordonnées d'une maison inoccupée inventoriée parmi des maisons comprises dans une carte, des informations d'attribut concernant un objet structurel, et des informations topographiques, et d'une image capturée qui est associée aux données cartographiques et comporte le quartier prédéterminé provenant d'un dispositif de stockage, et la génération de données d'apprentissage automatique pour la présomption qu'une maison dans l'image capturée est la maison inoccupée, les données d'apprentissage automatique étant générées sur la base, parmi des fragments d'informations de pixel représentant des sites des maisons dans l'image capturée comportant le quartier prédéterminé, des informations de pixel représentant un site d'une maison correspondant aux coordonnées de la maison inoccupée ;
un moyen de déduction de formule pour la déduction d'une formule de calcul de probabilité de maison inoccupée par rapport à un quartier spécifié par un utilisateur, sur la base des données cartographiques ;
un moyen de calcul de probabilité de maison inoccupée pour le calcul de la probabilité de maison inoccupée par rapport à chacune des maisons comprises dans le quartier spécifié dans les données cartographiques, en utilisant la formule de calcul de probabilité de maison inoccupée ; et
un moyen de détermination de maison inoccupée pour la détermination de si une maison dont la probabilité de maison inoccupée est égale ou supérieure à une valeur prédéterminée est une maison inoccupée dans le quartier spécifié, sur la base
de données d'apprentissage automatique pour la présomption qu'une maison dans l'image capturée est une maison inoccupée, les données d'apprentissage automatique étant générées sur la base, parmi des fragments d'informations de pixel représentant des sites des maisons dans l'image capturée, des informations de pixel représentant un site d'une maison correspondant aux coordonnées de la maison inoccupée, et
d'informations d'image concernant un site d'une maison dont la probabilité de maison inoccupée est égale ou supérieure à une valeur prédéterminée ;
un moyen de génération de carte pour la génération d'informations cartographiques de maison inoccupée indiquant une position de la maison qui a été déterminée comme étant une maison inoccupée ; et
un moyen de sortie pour la sortie des informations cartographiques de maison inoccupée vers un dispositif prédéterminé ou le dispositif de stockage.

2. Dispositif de détermination de maison inoccupée selon la revendication 1, dans lequel
le moyen d'apprentissage apprend un élément pour la détermination, sur la base des informations de pixels représentant un site d'une maison correspondant aux coordonnées de la maison inoccupée, qu'une maison est une maison inoccupée, et
le moyen de déduction de formule déduit la formule de calcul de probabilité de maison inoccupée qui comporte un terme de l'élément.

3. Procédé de détermination de maison inoccupée comprenant :
l'acquisition de données cartographiques qui comportent un quartier prédéterminé et comportent au moins des coordonnées d'une maison inoccupée inventoriée parmi des maisons comprises dans une carte, des informations d'attribut concernant un objet structurel, et des informations topographiques, et d'une image capturée qui est associée aux données cartographiques et comporte le quartier prédéterminé provenant d'un dispositif de stockage, et la génération de données d'apprentissage automatique pour la présomption qu'une maison dans l'image capturée est la maison inoccupée, les données d'apprentissage automatique étant générées sur la base, parmi des fragments d'informations de pixel représentant des sites des maisons dans l'image capturée comportant le quartier prédéterminé, des informations de pixel représentant un site d'une maison correspondant aux coordonnées de la maison inoccupée ;
la déduction d'une formule de calcul de probabilité de maison inoccupée par rapport à un quartier spécifié par un utilisateur, sur la base des données cartographiques ;
le calcul de la probabilité de maison inoccupée par rapport à chacune des maisons comprises dans le quartier spécifié dans les données cartographiques, en utilisant la formule de calcul de probabilité de maison inoccupée ; et
la détermination de si une maison dont la probabilité de maison inoccupée est égale ou supérieure à une valeur prédéterminée est une maison inoccupée dans le quartier spécifié, sur la base
de données d'apprentissage automatique pour la présomption qu'une maison dans l'image capturée est une maison inoccupée et d'informations d'image concernant un site d'une maison dont la probabilité de maison inoccupée est égale ou supérieure à une valeur prédéterminée, les données d'apprentissage automatique étant générées sur la base, parmi des fragments d'informations de pixel représentant des sites des maisons dans l'image capturée, des informations de pixel représentant un site d'une maison correspondant aux coordonnées de la maison inoccupée ;
la génération d'informations cartographiques de maison inoccupée indiquant une position de la maison qui a été déterminée comme étant une maison inoccupée ; et
la sortie des informations cartographiques de maison inoccupée vers un dispositif prédéterminé ou le dispositif de stockage.

4. Programme qui amène un ordinateur pour un dispositif de détermination de maison inoccupée à fonctionner comme :
un moyen d'apprentissage pour l'acquisition de données cartographiques qui comportent un quartier prédéterminé et comportent au moins des coordonnées d'une maison inoccupée inventoriée parmi des maisons comprises dans une carte, des informations d'attribut concernant un objet structurel, et des informations topographiques, et d'une image capturée qui est associée aux données cartographiques et comporte le quartier prédéterminé provenant d'un dispositif de stockage, et la génération de données d'apprentissage automatique pour la présomption qu'une maison dans l'image capturée est la maison inoccupée, les données d'apprentissage automatique étant générées sur la base, parmi des fragments d'informations de pixel représentant des sites des maisons dans l'image capturée comportant le quartier prédéterminé, des informations de pixel représentant un site d'une maison correspondant aux coordonnées de la maison inoccupée ;
un moyen de déduction de formule pour la déduction d'une formule de calcul de probabilité de maison inoccupée par rapport à un quartier spécifié par un utilisateur, sur la base des données cartographiques ;
un moyen de calcul de probabilité de maison inoccupée pour le calcul de la probabilité de maison inoccupée par rapport à chacune des maisons comprises dans le quartier spécifié dans les données cartographiques, en utilisant la formule de calcul de probabilité de maison inoccupée ; et
un moyen de détermination de maison inoccupée pour la détermination de si une maison dont la probabilité de maison inoccupée est égale ou supérieure à une valeur prédéterminée est une maison inoccupée dans le quartier spécifié, sur la base
de données d'apprentissage automatique pour la présomption qu'une maison dans l'image capturée est une maison inoccupée, les données d'apprentissage automatique étant générées sur la base, parmi des fragments d'informations de pixel représentant des sites des maisons dans l'image capturée, des informations de pixel représentant un site d'une maison correspondant aux coordonnées de la maison inoccupée, et
d'informations d'image concernant un site d'une maison dont la probabilité de maison inoccupée est égale ou supérieure à une valeur prédéterminée ;
un moyen de génération de carte pour la génération d'informations cartographiques de maison inoccupée indiquant une position de la maison qui a été déterminée comme étant une maison inoccupée ; et
un moyen de sortie pour la sortie des informations cartographiques de maison inoccupée vers un dispositif prédéterminé ou le dispositif de stockage.
